(19)

**Europäisches Patentamt**
**European Patent Office**
**Office européen des brevets**

(11)  **EP 4 770 019 A1**

(12)  # EUROPEAN PATENT APPLICATION

(43) Date of publication:
   **01.07.2026 Bulletin 2026/27**

(21) Application number: **25220470.6**

(22) Date of filing: **03.12.2025**

(51) International Patent Classification (IPC):
   $H04L\ 12/40^{(2006.01)}$       $H04L\ 12/403^{(2006.01)}$

(52) Cooperative Patent Classification (CPC):
   **H04L 12/403; H04L 12/40143;** H04L 2012/40273

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority: **24.12.2024 JP 2024226925**

(71) Applicant: **Toyota Jidosha Kabushiki Kaisha
   Toyota-shi, Aichi-ken 471-8571 (JP)**

(72) Inventor: **KANEKO, Naoji
   Toyota-shi, 471-8571 (JP)**

(74) Representative: **J A Kemp LLP
   80 Turnmill Street
   London EC1M 5QU (GB)**

(54)  **MANAGEMENT DEVICE, COMMUNICATION SYSTEM, VEHICLE, METHOD, AND STORAGE MEDIUM**

(57)    A management device (100) manages a plurality of communication devices (110; 120; 130; 140; 150; 160; 170) in a communication system (10) that communicates according to a predetermined beacon period. The management device (100) includes a processor. The processor acquires, from each of the communication devices (110; 120; 130; 140; 150; 160; 170), transmission data information that is information including a data amount and a transmission priority relating to data to be transmitted in the next beacon period; determines, based on a plurality of pieces of the transmission data information acquired, a transmission data amount allowed for each of the communication devices (110; 120; 130; 140; 150; 160; 170) in the next beacon period; and notifies the communication devices (110; 120; 130; 140; 150; 160; 170) of the determined transmission data amount in the current beacon period.

FIG. 1

10

EP 4 770 019 A1

**Description**

BACKGROUND OF THE INVENTION

1. Field of the Invention

The present disclosure relates to a management device in a communication system that communicates according to a predetermined beacon period, a communication system, a vehicle, a method, a storage medium, and a program.

2. Description of Related Art

Japanese Unexamined Patent Application Publication No. 2018-170550 (JP 2018-170550 A) discloses a system in which a plurality of nodes that perform data communication by a time division multiple access (TDMA) method and a management node that allocates time slots to the nodes are connected via a network. In this system, the management node determines whether it is necessary to reallocate time slots based on the data amount of transmission data communicated from each of the nodes, and notifies the nodes of information about the reallocated time slots.

SUMMARY OF THE INVENTION

When transmitting data, a storage area (such as a transmission buffer) that employs a first-in, first-out (FIFO) method or a first-in, last-out (FILO) method is often used. Furthermore, data with various priorities may be present in a mixed manner in this storage area. In such a situation, if time slots (frames) are allocated to each node based solely on the amount of data, the allocation of time slots may be consumed by low-priority data to be transmitted first, depending on the order in which data are stored in the transmission buffer, which may result in a failure or a delay of the transmission of high-priority data.
An object of the present disclosure is to provide a management device and the like that can preferentially transmit high-priority data through the entire communication system.
One aspect of the present disclosure relates to a management device configured to manage a plurality of communication devices in a communication system configured to communicate according to a predetermined beacon period. The management device includes a processor. The processor is configured to: acquire, from each of the communication devices, transmission data information including a data amount and a transmission priority relating to data to be transmitted in a next beacon period; determine, based on a plurality of pieces of the transmission data information acquired, a transmission data amount allowed for each of the communication devices in the next beacon period; and notify the communication devices of the determined transmission data amount in a current beacon period.
According to the management device and so forth of the present disclosure, the allocation of the data amount of data that can be transmitted within one beacon period by each of a plurality of communication devices is determined based on the transmission data information corresponding to the transmission priority, thereby making it possible to preferentially transmit high-priority data through the entire communication system.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates a schematic configuration of a communication system according to an embodiment of the present disclosure;
FIG. 2A illustrates functional blocks of a coordinator;
FIG. 2B illustrates functional blocks of a follower;
FIG. 3 illustrates an example of a PLCA cycle;
FIG. 4A illustrates a method of deriving transmission data information;
FIG. 4B illustrates a method of deriving transmission data information;
FIG. 5 is a flowchart of a process for coordinator control executed by the coordinator;
FIG. 6 is a flowchart of a process for follower control executed by the follower;
FIG. 7 illustrates a first specific example of a method of determining an allowable data transmission amount for the coordinator;
FIG. 8 illustrates a PLCA cycle based on the allowable transmission data amount according to the first specific example;

FIG. 9 illustrates a second specific example of a method of determining an allowable data transmission amount for the coordinator;

FIG. 10 illustrates a PLCA cycle based on the allowable transmission data amount according to the second specific example;

FIG. 11 illustrates a third specific example of a method of determining an allowable data transmission amount for the coordinator; and

FIG. 12 illustrates a PLCA cycle based on the allowable transmission data amount according to the third specific example.

## DETAILED DESCRIPTION OF EMBODIMENTS

In the present disclosure, in a PLCA cycle with beacons at constant intervals as a basic form in which transmission of a fixed number of plural frames as the burst function is scheduled, transmission frame information (priority weighting calculation results and number of frames) is submitted to a management device node (coordinator) in order to share frames of the burst function of a certain node (follower) with another node (follower), and this management device node (coordinator) performs adjustments and rescheduling according to the priority (modified PLCA cycle), thereby providing transmission opportunities for high-priority frames even in a PLCA cycle at constant intervals.

An embodiment of the present disclosure will be described in detail below with reference to the drawings.

Embodiment

1. Configuration

1-1. Communication System

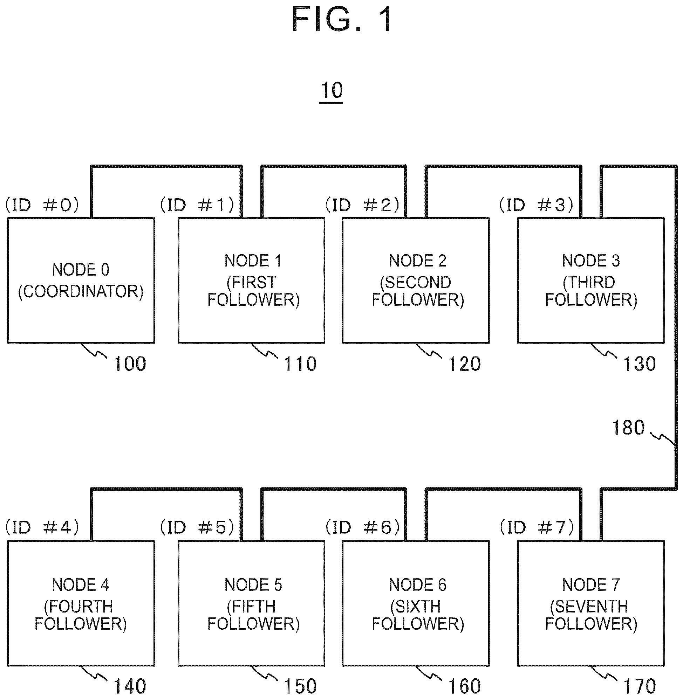

FIG. 1 is a block diagram illustrating a schematic configuration of a communication system 10 according to an embodiment of the present disclosure. The communication system 10 illustrated in FIG. 1 has a configuration in which a plurality of nodes 100 to 170 that are communication devices are connected by a multi-drop connection via a communication bus 180. The communication system 10 is mounted on a vehicle, for example.

The communication system 10 implements a physical level collision avoidance (PHY-Level Collision Avoidance: PLCA) function to suppress collisions occurring when the nodes 100 to 170 start communication at the same time. Hereinafter, the present embodiment will be described by taking a 10BASE-T1S network system as an example of the communication system 10 implementing the PLCA function.

Among the nodes 100 to 170 illustrated in FIG. 1, the node 0_100 (hereinafter referred to as a "coordinator 100") is a node (management device) that has the function of controlling/managing communication in the entire communication system 10. The coordinator 100 is assigned a unique identifier (ID) "#0" that determines the order of transmission opportunities.

The nodes 100 to 170 other than the coordinator 100, namely the node 1_110 (hereinafter referred to as a "first follower 110"), the node 2_120 (hereinafter referred to as a "second follower 120"), the node 3_130 (hereinafter referred to as a "third follower 130"), the node 4_140 (hereinafter referred to as a "fourth follower 140"), the node 5_150 (hereinafter referred to as a "fifth follower 150"), the node 6_160 (hereinafter referred to as a "sixth follower 160"), and the node 7_170 (hereinafter referred to as a "seventh follower 170"), are nodes (communication devices) whose communication is controlled by the coordinator 100. The first follower 110, the second follower 120, the third follower 130, the fourth follower 140, the fifth follower 150, the sixth follower 160, and the seventh follower 170 are assigned unique IDs "#1", "#2", "#3", "#4", "#5", "#6", and "#7", respectively.

1-2. Coordinator

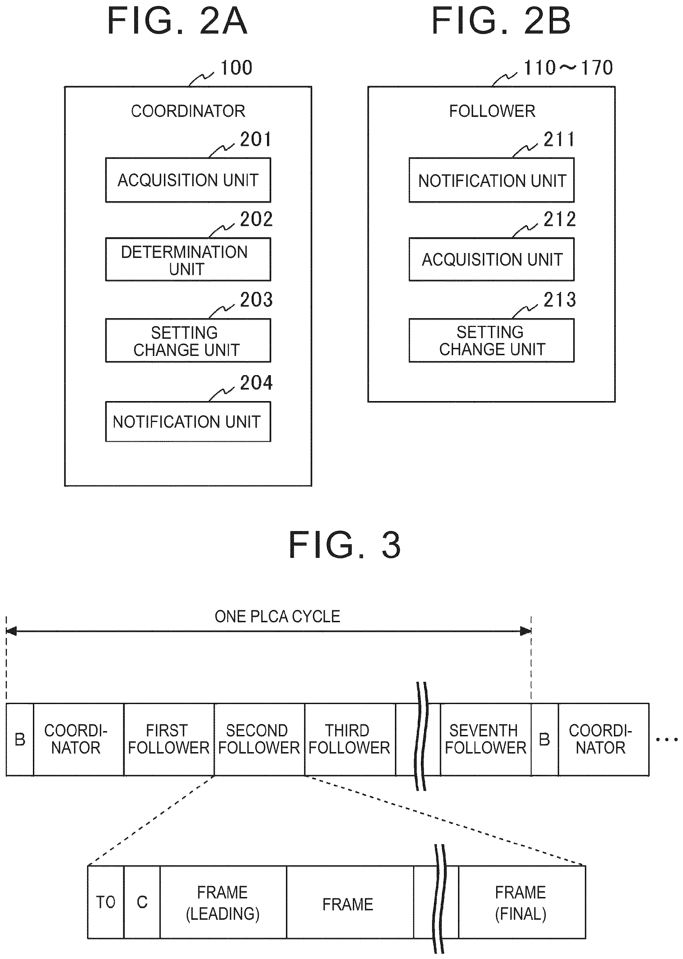

FIG. 2A illustrates an example of functional blocks of the coordinator 100. The functional blocks of the coordinator 100 illustrated in FIG. 2A include an acquisition unit 201, a determination unit 202, a setting change unit 203, and a notification unit 204. The functions of the acquisition unit 201, the determination unit 202, the setting change unit 203, and the notification unit 204 are implemented by a processor included in the coordinator 100.

The acquisition unit 201 acquires and grasps transmission data information relating to data that are desired to be transmitted from the first follower 110 to the seventh follower 170 in the next beacon period (PLCA cycle). The transmission data information, the details of which will be described later, includes the amount of data (number of frames) and the transmission priority as the result of weight calculation. The determination unit 202 determines the transmission data amount allowed for each of the first follower 110 to the seventh follower 170 in the next beacon period (PLCA cycle), based on the plurality of pieces of transmission data information acquired by the acquisition unit 201. When the coordinator 100 also has data desired to be transmitted, the transmission data amount is determined further in consideration of the transmission data information of the device itself. The determination method, the details of which will be described later, is performed by allocating the number of frames of the burst function deployed from each of the first follower 110 to the seventh follower 170 to the transmission of high-priority frames (a modification of the PLCA cycle). The setting change unit 203 changes the setting of the PLCA according to the content of the modification of the PLCA cycle determined by the determination unit 202. The notification unit 204 notifies each of the first follower 110 to the seventh follower 170 of the allowed transmission data amount determined by the determination unit 202.

1-3. Follower

FIG. 2B illustrates an example of functional blocks common to the first follower 110 to the seventh follower 170. The functional blocks of each of the first follower 110 to the seventh follower 170 illustrated in FIG. 2B include a notification unit 211, an acquisition unit 212, and a setting change unit 213.

The notification unit 211 notifies the coordinator 100 of transmission data information relating to data that the device itself desires to transmit in the next beacon period (PLCA cycle). The acquisition unit 212 acquires, from the coordinator 100, the transmission data amount of data that the device itself is allowed to transmit in the next beacon period (PLCA cycle). The setting change unit 213 changes the setting of the PLCA according to the transmission data amount acquired by the acquisition unit 212.

2. PLCA Cycle

FIG. 3 illustrates a PLCA cycle as a transmission period that is used by the communication system 10. As illustrated in FIG. 3, one cycle (beacon period) of the PLCA cycle is determined from a beacon signal (B) as a synchronization pattern to the next beacon signal (B), and one PLCA cycle is provided with transmission opportunities for the coordinator 100, the first follower 110, the second follower 120, the third follower 130, the fourth follower 140, the fifth follower 150, the sixth follower 160, and the seventh follower 170 in this order. Each of the transmission opportunities is provided with a TO signal and a commit signal (C) that indicate the start of the transmission opportunity, followed by a predetermined number frames that are used to transmit data and the like.

In the present embodiment, the leading frame of each transmission opportunity is used for notification. Specifically, in the leading frame of the transmission opportunity for the coordinator 100, the transmission data amount allowed for each of the first follower 110 to the seventh follower 170 determined by the determination unit 202 is transmitted toward the first follower 110 to the seventh follower 170 (broadcast transmission). In the leading frame of the transmission opportunity for the first follower 110, transmission data information for the first follower 110 for the next beacon period (PLCA cycle) is transmitted toward the coordinator 100. In the leading frame of the transmission opportunity for the second follower 120, transmission data information for the second follower 120 for the next beacon period (PLCA cycle) is transmitted toward the coordinator 100. In the leading frame of the transmission opportunity for the third follower 130, transmission data information for the third follower 130 for the next beacon period (PLCA cycle) is transmitted toward the coordinator 100. In the leading frame of the transmission opportunity for the fourth follower 140, transmission data information for the fourth follower 140 for the next beacon period (PLCA cycle) is transmitted toward the coordinator 100. In the leading frame of the transmission opportunity for the fifth follower 150, transmission data information for the fifth follower 150 for the next beacon period (PLCA cycle) is transmitted toward the coordinator 100. In the leading frame of the transmission opportunity for the sixth follower 160, transmission data information for the sixth follower 160 for the next beacon period (PLCA cycle) is transmitted toward the coordinator 100. In the leading frame of the transmission opportunity for the seventh follower 170, transmission data information for the seventh follower 170 for the next beacon period (PLCA cycle) is transmitted toward the coordinator 100.

3. Transmission Data Information

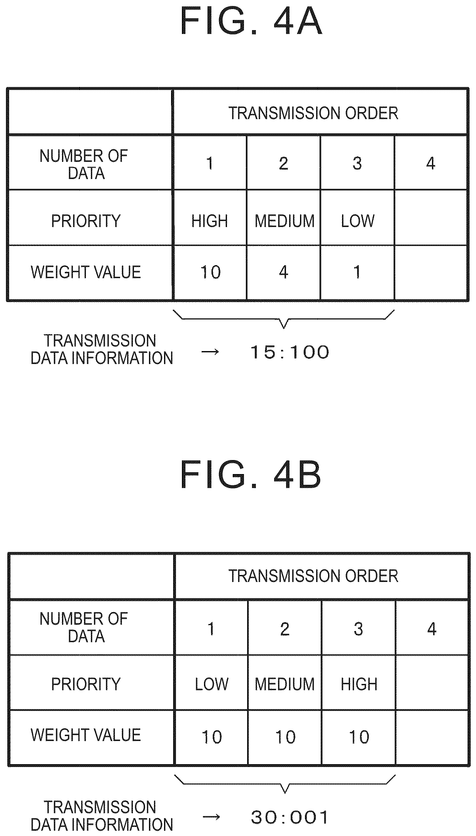

FIGS. 4A and 4B each illustrate an example of transmission data information transmitted by each of the first follower 110 to the seventh follower 170 toward the coordinator 100. The basic conditions for preparing transmission data information are that a weight of "10" is assigned to data with a "high" transmission priority (high-priority frames), a weight of "4" is assigned to data with a "medium" transmission priority (medium-priority frames), and a weight of "1" is assigned to data with a "low" transmission priority (low-priority frames). It is assumed that transmission buffers (buffers that temporarily store data while standing by for transmission) of the coordinator 100 and each of the first follower 110 to the seventh follower 170 are of the first-in, first-out (FIFO) type.

FIG. 4A illustrates an example in which three frames, namely a high-priority frame, a medium-priority frame, and a low-priority frame, are stored in the transmission order in the transmission buffer. In the case of this example, the high-priority frame can be transmitted (output from the transmit buffer) before the medium-priority frame and the low-priority frame. Therefore, each frame is assigned a weight according to the transmission priority. Then, as the transmission data information in the example in FIG. 4A, a total weight value "15 (= 10 + 4 + 1)", obtained by adding up the weights of these three frames, and "100" which indicates that the number of frames is three and the storage position of the high-priority frame of the three in the transmission buffer is indicated by a logical value of 1 are derived (calculated).

FIG. 4B illustrates an example in which three frames, namely a low-priority frame, a medium-priority frame, and a high-priority frame, are stored in the transmission order in the transmission buffer. In the case of this example, the high-priority frame cannot be transmitted (output from the transmit buffer) before the medium-priority frame and the low-priority frame. Therefore, in order to prioritize the transmission of the high-priority frame, all the frames including the high-priority frame are assigned the same weight of "10" as the transmission priority "high", regardless of their respective transmission priorities. Then, as the transmission data information in the example in FIG. 4B, a total weight value "30 (= 10 + 10 + 10)", obtained by adding up the weights of these three frames, and "001" which indicates that the number of frames is three and the storage position of the high-priority frame of the three in the transmission buffer is indicated by a logical value of 1 are derived (calculated).

## 4. Control

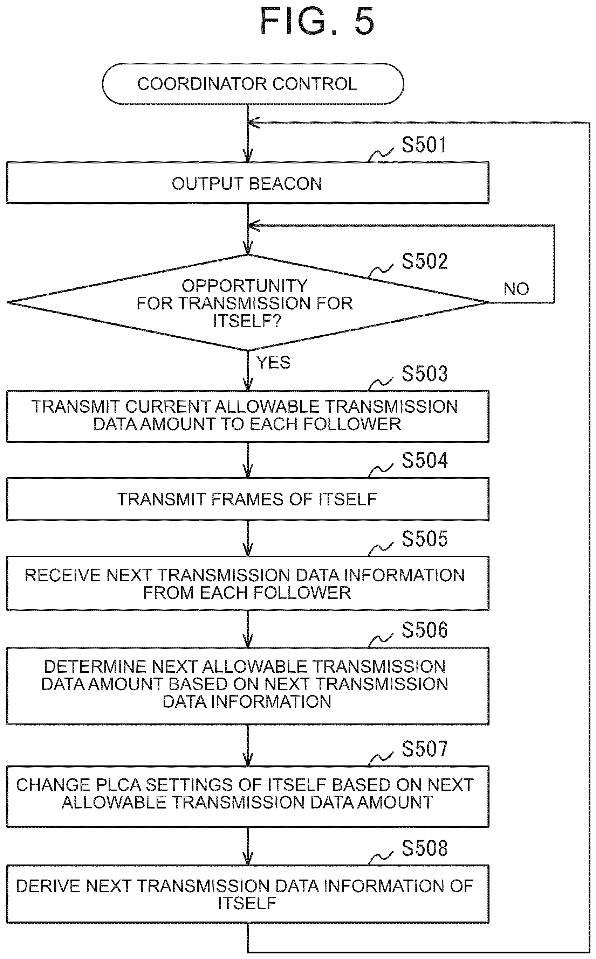

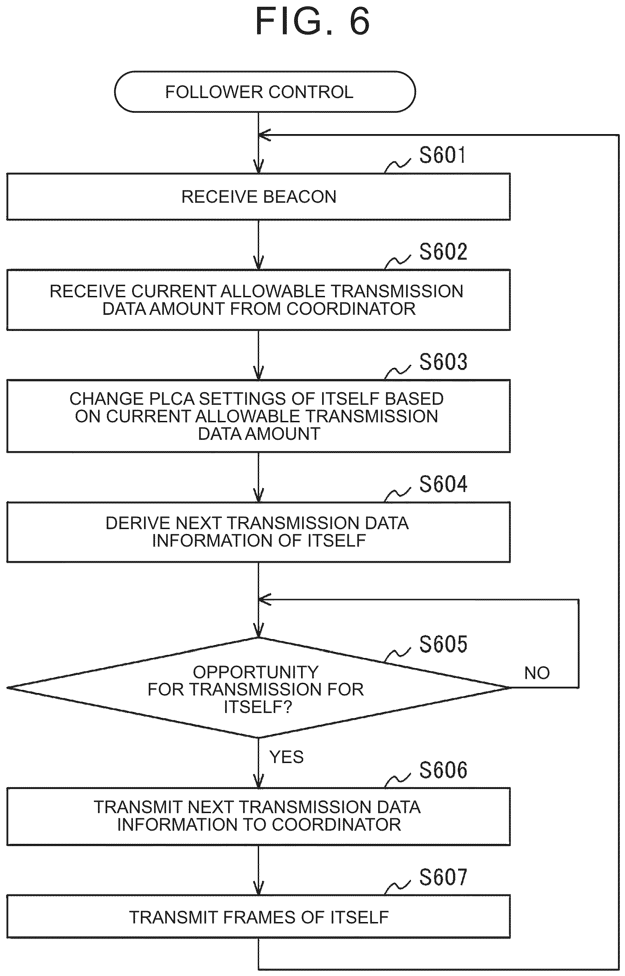

Next, control performed by the coordinator 100 and each of the first follower 110 to the seventh follower 170 will be described with further reference to FIGS. 5 and 6.

## 4-1. Coordinator Control

FIG. 5 is a flowchart illustrating the procedure of a process for coordinator control executed by the coordinator 100. This coordinator control is started when the communication system 10 is turned on or brought into a wake-up state, and is repeatedly executed until the output of beacons is stopped as the communication system 10 is turned off or brought into a sleep state, for example.

In step S501, the coordinator 100 outputs a beacon that indicates the start of a PLCA cycle. When the coordinator 100 outputs a beacon, the process proceeds to step S502.

In step S502, the coordinator 100 determines whether an opportunity has arrived to transmit frames of data of the device itself to the communication bus 180. This arrival of a transmission opportunity for the device itself can be determined by receiving a TO signal that indicates the start of a transmission opportunity for the device itself. When a transmission opportunity for the device itself has arrived, the process proceeds to step S503.

In step S503, the coordinator 100 transmits the allowable transmission data amount for each of the first follower 110 to the seventh follower 170, determined in the preceding processing (step S506 below), to the communication bus 180 using the leading frame. When the coordinator 100 transmits the allowable transmission data amount, the process proceeds to step S504.

In step S504, when there are data to be transmitted, the coordinator 100 transmits the data to the communication bus 180 using frames following the leading frame. When the coordinator 100 finishes transmitting frames of the data of the device itself, the process proceeds to step S505.

In step S505, the coordinator 100 receives transmission data information for the next beacon period (PLCA cycle) from each of the first follower 110 to the seventh follower 170. This transmission data information can be acquired by receiving the leading frame of the transmission opportunity for each of the first follower 110 to the seventh follower 170. When the coordinator 100 receives the next transmission data information from each of the first follower 110 to the seventh follower 170, the process proceeds to step S506.

In step S506, the coordinator 100 determines the allowable transmission data amount, as the number of frames to be allocated to each node (coordinator 100 and each of first follower 110 to seventh follower 170) in the next beacon period (PLCA cycle), based on the next transmission data information received from each of the first follower 110 to the seventh follower 170 and the next transmission data information of the device itself derived in the preceding processing (step S508 below). This determination method will be described later. When the coordinator 100 determines the allowable transmission data amount, the process proceeds to step S507.

In step S507, the coordinator 100 changes the PLCA settings of the device itself (changes the PLCA cycle) based on the determined allowable transmission data amount for the device itself. When the coordinator 100 changes the PLCA settings of the device itself, the process proceeds to step S508.

In step S508, the coordinator 100 derives the transmission data information that the device itself desires to transmit in the next beacon period (PLCA cycle). When the coordinator 100 derives the next transmission data information for the device itself, the process proceeds to step S501.

4-2. Follower Control

FIG. 6 is a flowchart illustrating the procedure of a process for follower control individually executed by each of the first follower 110 to the seventh follower 170. This follower control is started when a beacon is output from the coordinator 100 as the communication system 10 is turned on or brought into a wake-up state, and is repeatedly executed until the coordinator 100 stops outputting beacons, for example.

In step S601, the n-th follower 1n0 (n = 1 to 7) receives a beacon that indicates the start of a PLCA cycle. When the n-th follower 1n0 receives a beacon, the process proceeds to step S602.

In step S602, the n-th follower 1n0 receives the allowable transmission data amount for the device itself for the current beacon cycle (PLCA cycle) from the coordinator 100. This transmission data information can be acquired by receiving the leading frame of the transmission opportunity for the coordinator 100. When the n-th follower 1n0 receives the current allowable transmission data amount from the coordinator 100, the process proceeds to step S603.

In step S603, the n-th follower 1n0 changes the PLCA settings of the device itself (changes the PLCA cycle) based on the received allowable transmission data amount for the device itself. When the n-th follower 1n0 changes the PLCA settings of the device itself, the process proceeds to step S604.

In step S604, the n-th follower 1n0 derives the transmission data information that the device itself desires to transmit in the next beacon period (PLCA cycle). When the n-th follower 1n0 derives the next transmission data information for the device itself, the process proceeds to step S605.

In step S605, the n-th follower 1n0 determines whether an opportunity has arrived to transmit frames of data of the device itself to the communication bus 180. This arrival of a transmission opportunity for the device itself can be determined by receiving a TO signal that indicates the start of a transmission opportunity for the device itself. When a transmission opportunity for the device itself has arrived, the process proceeds to step S606.

In step S606, the n-th follower 1n0 transmits the next transmission data information of the device itself derived in step S604 to the coordinator 100. The transmission data information is transmitted using the leading frame of the transmission opportunity for the n-th follower 1n0. When the n-th follower 1n0 transmits the next transmission data information, the process proceeds to step S607.

In step S607, when there are data to be transmitted, the n-th follower 1n0 transmits the data to the communication bus 180 using frames following the leading frame. When the n-th follower 1n0 finishes transmitting frames of the data of the device itself, the process proceeds to step S601.

5. Method of Determining Allowable Transmission Data Amount

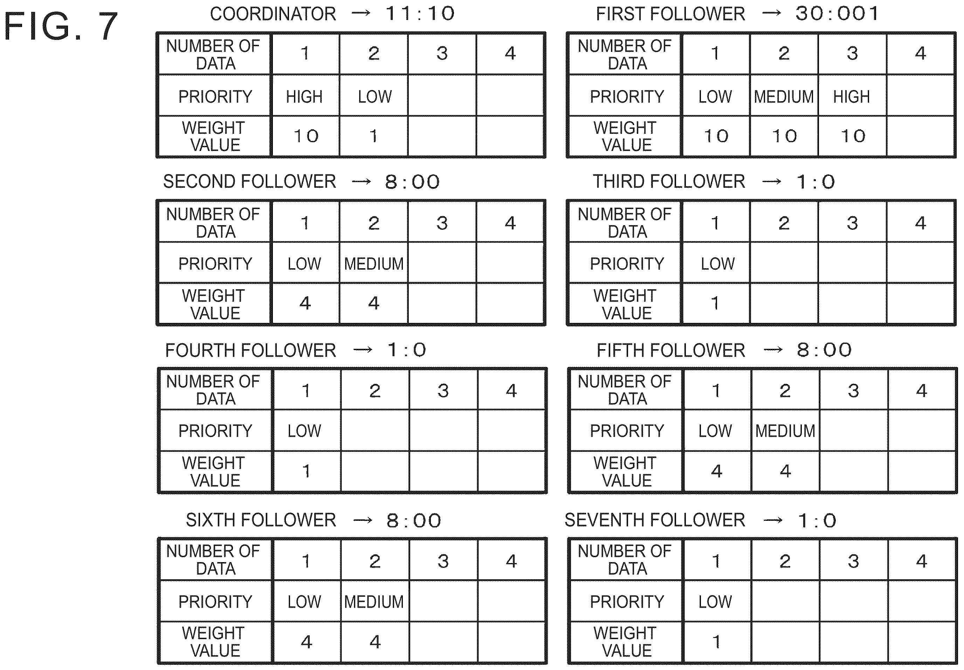

A method by which the determination unit 202 of the coordinator 100 determines the allowable transmission data amount will be specifically described with reference to FIGS. 7 to 12.

In each specific example, the initial value of the number of frames given to the transmission opportunities for the eight nodes in the PLCA cycle is set to "3", and the total number of frames that can be used for data transmission in the entire PLCA cycle is set to "16 (= 2 frames other than the leading frame × 8 nodes)". In addition, a weight of "10" is assigned to data with a "high" transmission priority (high-priority frames), a weight of "4" is assigned to data with a "medium" transmission priority (medium-priority frames), and a weight of "1" is assigned to data with a "low" transmission priority (low-priority frames).

5-1. First Specific Example

FIG. 7 illustrates an example in which the total number of frames desired for data transmission by the coordinator 100 and each of the first follower 110 to the seventh follower 170 is equal to or less than the total number of frames described above.

In this first specific example, the coordinator 100 has a buffer storage order that allows a high-priority frame to be transmitted before a low-priority frame. Therefore, the transmission data information of this coordinator 100 includes a total weight value of "11 (= 10 + 1)" obtained by adding up the original weights of these two frames, and "10" indicating that the number of frames (data amount) is two and the transmission order of the high priority frame.

The first follower 110 has a buffer storage order that does not allow a high-priority frame located in the third order to be transmitted before a medium-priority frame and a low-priority frame. Therefore, the transmission data information of this first follower 110 includes a total weight value of "30 (= 10 + 10 + 10)" obtained by setting the weights of all these three frames to "high" and adding up the weights, and "001" indicating that the number of frames (data amount) is three and the transmission order of the high-priority frame.

The second follower 120, the fifth follower 150, and the sixth follower 160 have a buffer storage order that does not allow a medium-priority frame located in the second order to be transmitted before a low-priority frame. Therefore, the transmission data information of the second follower 120, the fifth follower 150, and the sixth follower 160 includes a total weight value of "8 (= 4 + 4)" obtained by setting the weights of all these two frames to "medium" and adding up the weights, and "00" indicating that the number of frames (data amount) is two.

The third follower 130, the fourth follower 140, and the seventh follower 170 each have only one low-priority frame stored in the transmission buffer. Therefore, the transmission data information of the third follower 130, the fourth follower 140, and the seventh follower 170 includes a total weight value of "1" and "0" indicating that the number of frames (data amount) is one.

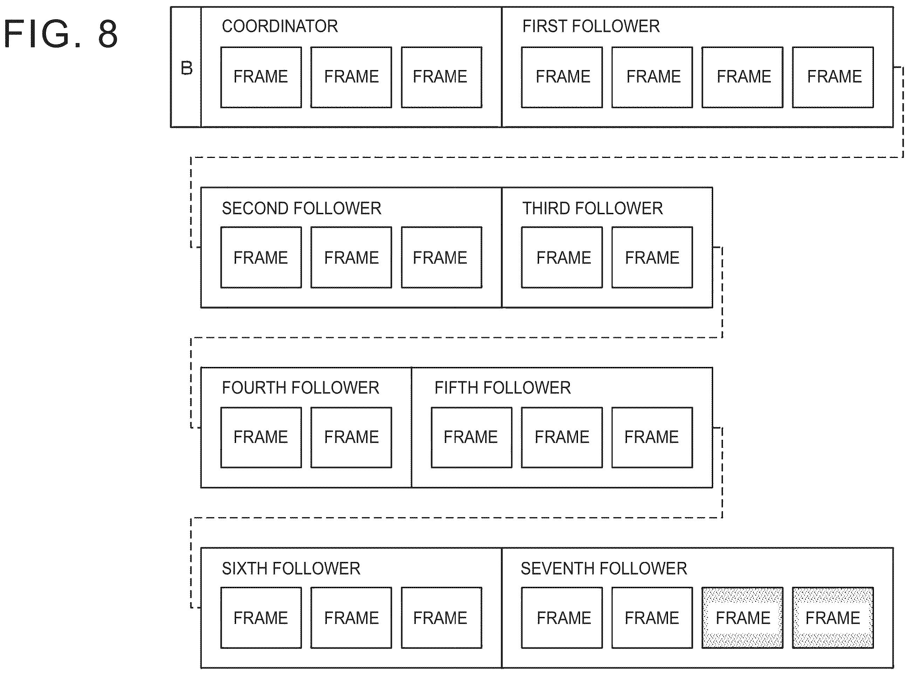

In this first specific example, as described above, the total number of frames desired for data transmission by the coordinator 100 and each of the first follower 110 to the seventh follower 170, "14 (= 2 + 3 + 2 + 1 + 1 + 2 + 2 + 1)", is equal to or less than the total number of frames in the PLCA cycle, "16". Therefore, as illustrated in the PLCA cycle in FIG. 8, the number of frames (data amount) desired by the coordinator 100 and the first follower 110 to the seventh follower 170 is allocated as it is (a modification of the PLCA cycle). The two frames that are missing from the total number of frames "16" may be provided in the seventh follower 170 as indicated by the shaded frames in FIG. 8, or may be allocated to followers in order from the lowest node number according to a request to use an additional frame.

5-2. Second Specific Example

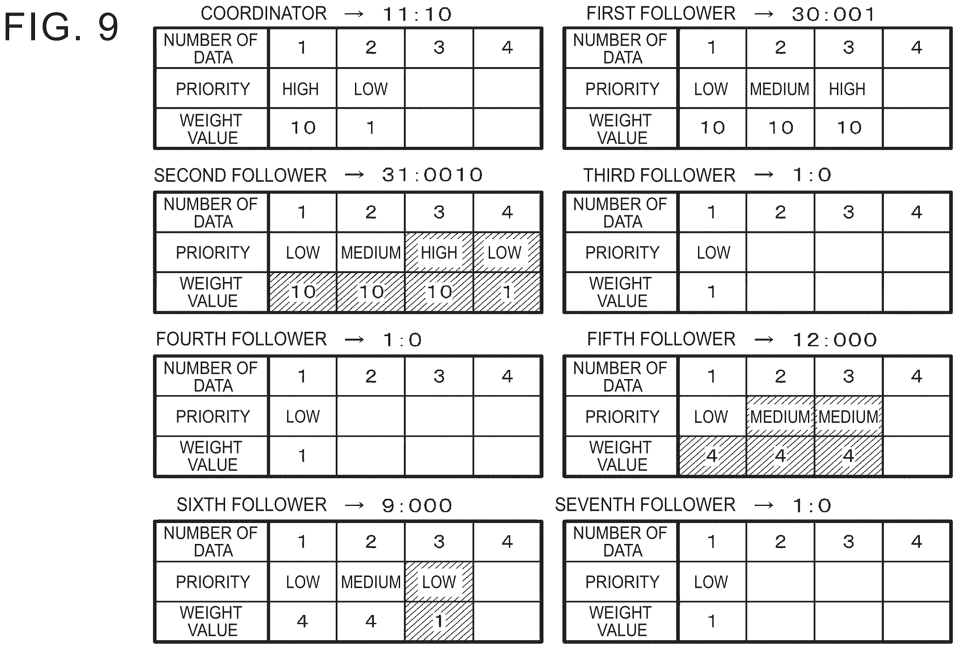

FIG. 9 illustrates an example in which the total number of frames desired for data transmission by the coordinator 100 and each of the first follower 110 to the seventh follower 170 is more than the total number of frames described above. This second specific example is different from the first specific example described above in the shaded portions in the transmission data information of the second follower 120, the fourth follower 140, and the fifth follower 150 illustrated in FIG. 9. Therefore, the differences in the transmission data information will be described below.

In this second specific example, the second follower 120 has a buffer storage order that does not allow a high-priority frame located in the third order to be transmitted before a medium-priority frame and a low-priority frame. Additionally, the frame in the fourth order is a low-priority frame. Therefore, the transmission data information of this second follower 120 includes a total weight value of "31 (= 10 + 10 + 10 + 1)" obtained by setting the weights of all the three frames up to the high-priority frame, of the four frames, to "high", maintaining the original weight of the low-priority frame, and adding up the weights, and "0010" indicating that the number of frames (data amount) is four and the transmission order of the high-priority frame.

The fifth follower 150 has a buffer storage order that does not allow medium-priority frames located in the second order and the third order to be transmitted before a low-priority frame. Therefore, the transmission data information of this fifth follower 150 includes a total weight value of "12 (= 4 + 4 + 4)" obtained by setting the weights of these three frames to "medium" and adding up the weights, and "000" indicating that the number of frames (data amount) is three.

The sixth follower 160 has a buffer storage order that does not allow a medium-priority frame located in the second order to be transmitted before a low-priority frame. Additionally, the frame in the third order is a low-priority frame. Therefore, the transmission data information of this sixth follower 160 includes a total weight value of "9 (= 4 + 4 + 1)" obtained by setting the weights of the two frames up to the medium-priority frame, of the three frames, to "medium", maintaining the original weight of the low-priority frame, and adding up the weights, and "000" indicating that the number of frames (data amount) is three.

In this second specific example, as described above, the total number of frames desired for data transmission by the coordinator 100 and each of the first follower 110 to the seventh follower 170, "18 (= 2 + 3 + 4 + 1 + 1 + 3 + 3 + 1)", is more than the total number of frames in the PLCA cycle, "16". In such a case, a coefficient for allocating frames is calculated according to the following equation 1 based on the sum of the total weight values of the coordinator 100 and each of the first follower 110 to the seventh follower 170 and the total number of frames. The coefficient according to the second specific example calculated according to this equation 1 is 1/6 (= 16/96 (= 11 + 30 + 31 + 1 + 1 + 12 + 9 + 1)).

$$\text{Coefficient} = (\text{total number of frames})/\Sigma(\text{total weight value}) \quad \text{... [Equation 1]}$$

Next, based on this coefficient, the provisional number of frames to be allocated to the coordinator 100 and each of the first follower 110 to the seventh follower 170 is calculated according to the following equation 2. ROUND is a function that rounds off a value to the first decimal place.

$$\text{Provisional number of frames} = \text{ROUND}(\text{coefficient x weight}) \quad \text{... [Equation 2]}$$

According to this equation 2, the provisional number of frames to be allocated to the coordinator 100 and each of the first follower 110 to the seventh follower 170 is calculated as follows.

Coordinator 100: 2 (= ROUND(1/6 x 11))

First follower 110: 5 (= ROUND(1/6 x 30))

Second follower 120: 5 (= ROUND(1/6 x 31))

Third follower 130: 0 (= ROUND(1/6 x 1))

Fourth follower 140: 0 (= ROUND(1/6 x 1))

Fifth follower 150: 2 (= ROUND(1/6 x 12))

Sixth follower 160: 2 (= ROUND(1/6 x 9))

Seventh follower 170: 0 (= ROUND(1/6 x 1))

Next, each provisional number of frames is reduced to the maximum number of frames desired for data transmission by the coordinator 100 and each of the first follower 110 to the seventh follower 170. Specifically, for the first follower 110, a provisional number of frames of "5" is allocated, whereas three frames (data) are stored in the transmission buffer. Therefore, the provisional number of frames of the first follower 110 is reduced to "3". Meanwhile, for the second follower 120, a provisional number of frames of "5" is allocated, whereas four frames (data) are stored in the transmission buffer. Therefore, the provisional number of frames of the second follower 120 is reduced to "4".

The provisional number of frames after being reduced to the maximum number of frames is as follows.

Coordinator 100: 2
First follower 110: 3 (← 5)
Second follower 120: 4 (← 5)
Third follower 130: 0
Fourth follower 140: 0
Fifth follower 150: 2
Sixth follower 160: 2
Seventh follower 170: 0

Furthermore, the total value of each provisional number of frames after being reduced to the maximum number of frames is 13 (= 2 + 3 + 4 + 0 + 0 + 2 + 2 + 0). Therefore, the three frames that are missing from the total number of frames "16" in the PLCA cycle are finally allocated. This final allocation is performed in descending order of the provisional number of frames, among the nodes for which the number of frames desired for data transmission is not satisfied. In the second specific example, the number of frames desired is satisfied for the coordinator 100, the first follower 110, and the second follower 120, and therefore one frame each is allocated to the fifth follower 150 and the sixth follower 160 which have the next largest provisional number of frames. The remaining one frame is allocated to the third follower 130 which has the smaller node number, of the third follower 130, the fourth follower 140, and the seventh follower 170.

The number of frames after being subjected to this final allocation process is as follows.

Coordinator 100: 2
First follower 110: 3
Second follower 120: 4
Third follower 130: 1 (← 0)
Fourth follower 140: 0
Fifth follower 150: 3 (← 2)
Sixth follower 160: 3 (← 2)
Seventh follower 170: 0

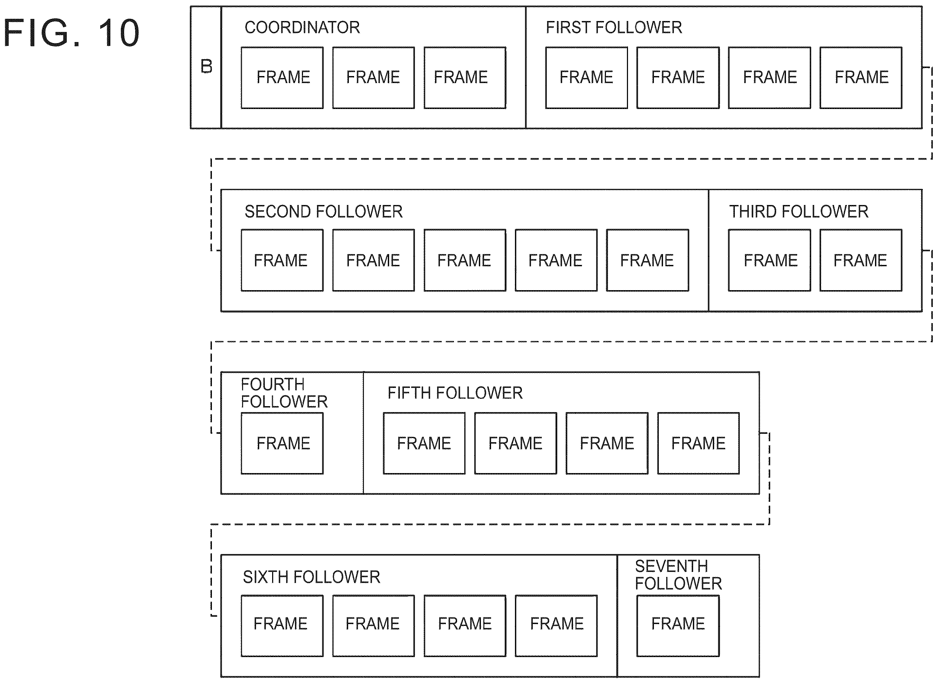

Through the above processing, allocation of all the 16 frames of the PLCA cycle accompanied by a modification of the PLCA cycle is completed. Consequently, as illustrated in the PLCA cycle in FIG. 10, the coordinator 100, the first follower 110, and the second follower 120 can transmit the high-priority frames stored in the transmission buffers in the next PLCA cycle. On the other hand, the low-priority frames stored in the transmission buffers of the fourth follower 140 and the seventh follower 170 are to be transmitted in the next next PLCA cycle or later.

5-3. Third Specific Example

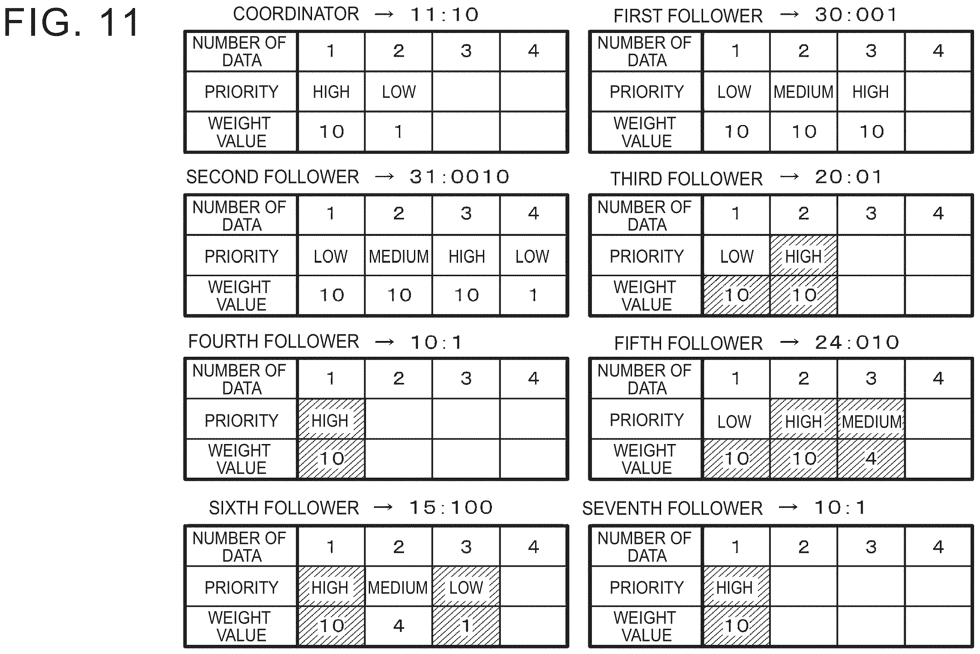

FIG. 11 illustrates an example in which the total number of frames desired for data transmission by the coordinator 100 and each of the first follower 110 to the seventh follower 170 is more than the total number of frames described above, and in which the coordinator 100 and each of the first follower 110 to the seventh follower 170 include a high-priority frame. This third specific example is further different from the second specific example described above in the shaded portions in the transmission data information of the third follower 130 to the seventh follower 170 illustrated in FIG. 11. Therefore, the further differences in the transmission data information will be described below.

In this third example, the third follower 130 has a buffer storage order that does not allow a high-priority frame located in the second order to be transmitted before a low-priority frame. Therefore, the transmission data information of this third follower 130 includes a total weight value of "20 (= 10 + 10)" obtained by setting the weights of all these two frames to "high" and adding up the weights, and "01" indicating that the number of frames (data amount) is two and the transmission order of the high-priority frame.

The fourth follower 140 and the seventh follower 170 each have only one high-priority frame stored in the transmission buffer. Therefore, the transmission data information of the fourth follower 140 and the seventh follower 170 includes a total weight value of "10" and "1" indicating that the number of frames (data amount) is one.

The fifth follower 150 has a buffer storage order that does not allow a high-priority frame located in the second order to be transmitted before a low-priority frame. Additionally, the frame in the third order is a medium-priority frame. Therefore, the transmission data information of this fifth follower 150 includes a total weight value of "24 (= 10 + 10 + 4)" obtained by setting the weights of all the two frames up to the high-priority frame, of the three frames, to "high", maintaining the original weight of the medium-priority frame, and adding up the weights, and "010" indicating that the number of frames (data amount) is three and the transmission order of the high-priority frame.

The sixth follower 160 has a buffer storage order that allows a high-priority frame located in the first order to be transmitted before a medium-priority frame and a low-priority frame. Therefore, the transmission data information of this sixth follower 160 includes a total weight value of "15 (= 10 + 4 + 1)" obtained by adding up the original weights of these three frames, and "100" indicating that the number of frames (data amount) is three and the transmission order of the high-priority frame.

In this third specific example, as described above, the total number of frames desired for data transmission by the coordinator 100 and each of the first follower 110 to the seventh follower 170, "19 (= 2 + 3 + 4 + 2 + 1 + 3 + 3 + 1)", is more than the total number of frames in the PLCA cycle, "16". In such a case, a coefficient for allocating frames, 16/151 (= 11 + 30 + 31 + 20 + 10 + 24 + 15 + 10), is calculated according to the above equation 1 based on the sum of the total weight values of the coordinator 100 and each of the first follower 110 to the seventh follower 170 and the total number of frames.

Furthermore, based on this coefficient, the provisional number of frames to be allocated to the coordinator 100 and each of the first follower 110 to the seventh follower 170 is calculated according to the above equation 2.

$$\text{Coordinator 100: } 1 \ (= \text{ROUND}(16/151 \times 11))$$

$$\text{First follower 110: } 3 \ (= \text{ROUND}(16/151 \times 30))$$

$$\text{Second follower 120: } 3 \ (= \text{ROUND}(16/151 \times 31))$$

$$\text{Third follower 130: } 2 \ (= \text{ROUND}(16/151 \times 20))$$

$$\text{Fourth follower 140: } 1 \ (= \text{ROUND}(16/151 \times 10))$$

$$\text{Fifth follower 150: } 3 \ (= \text{ROUND}(16/151 \times 24))$$

Sixth follower 160: 2 (= ROUND(16/151 x 15))

Seventh follower 170: 1 (= ROUND(16/151 x 10))

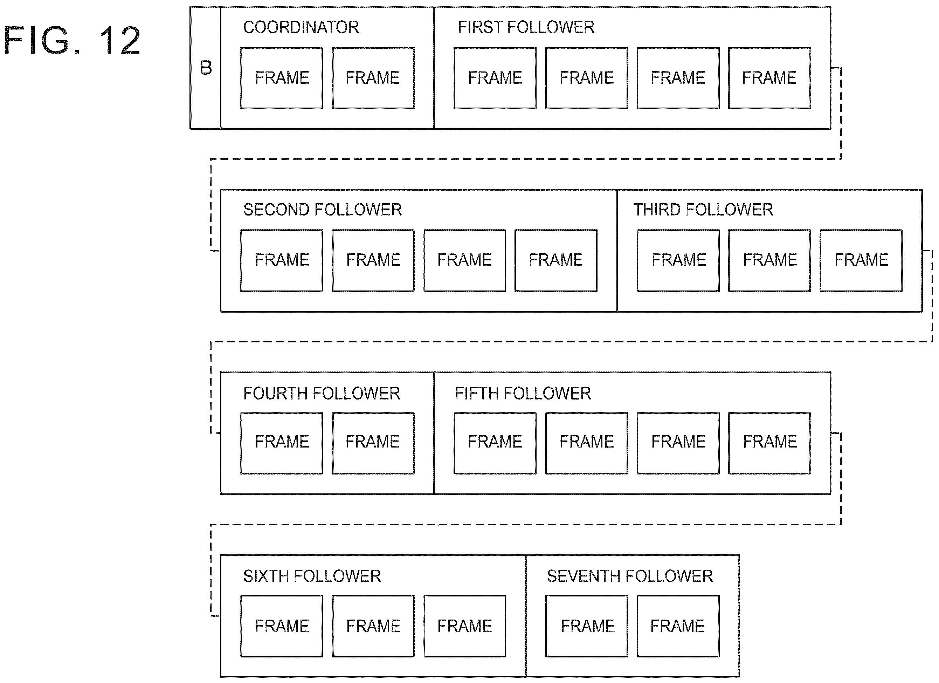

The total value of each provisional number of frames after being reduced to the maximum number of frames is 16 (= 1 + 3 + 3 + 2 + 1 + 3 + 2 + 1), and coincides with the total number of frames in the PLCA cycle. Therefore, this provisional number of frames is the final number of frames to be allocated. In this third specific example, as illustrated in the PLCA cycle in FIG. 12, the coordinator 100 and each of the first follower 110 to the seventh follower 170 can transmit all the high-priority frames stored in the transmission buffers in the next PLCA cycle. On the other hand, the low-priority frames stored at the tail end positions in the transmission buffers of the coordinator 100, the second follower 120, and the sixth follower 160 are to be transmitted in the next next PLCA cycle or later.

The nodes for which transmission of a low-priority frame is delayed to the next next PLCA cycle or later may be able to request (add) a number of frames (data size) desired in the next transmission data information to be sent to the coordinator 100.

Functions and Effects

As described above, the coordinator (management device) 100 according to one embodiment of the present disclosure acquires transmission data information from each of the first follower 110 to the seventh follower 170 (plurality of communication devices), the transmission data information including the data amount and the transmission priority relating to data desired to be transmitted in the next beacon period (PLCA cycle), determines the transmission data amount allowed for each of the first follower 110 to the seventh follower 170 in the next beacon period based on the plurality of pieces of transmission data information acquired, and notifies the first follower 110 to the seventh follower 170 of the determined transmission data amount in the current beacon period.

Through this process, the allocation of the data amount (number of frames) of data that can be transmitted within one beacon period (PLCA cycle) by each of the coordinator 100 and the first follower 110 to the seventh follower 170 is determined based on the transmission data information corresponding to the transmission priority, thereby improving the probability that high-priority data (high-priority frames) can be preferentially transmitted through the entire communication system 10.

While one embodiment of the present disclosure has been described above, the present disclosure is not limited to the management device described above, and can be understood as a communication system including the management device and a plurality of communication devices, a vehicle equipped with the communication system, a method executed by the management device, a program for the method, a computer-readable non-transitory recording medium storing the program, and so forth.

The management device and so forth disclosed herein can be used in vehicles equipped with a 10BASE-T1S network system.

**Claims**

1. A management device (100) configured to manage a plurality of communication devices (110; 120; 130; 140; 150; 160; 170) in a communication system (10) configured to communicate according to a predetermined beacon period, the management device comprising a processor configured to:

   acquire, from each of the communication devices (110; 120; 130; 140; 150; 160; 170), transmission data information including information on a data amount and transmission priority relating to data to be transmitted in a next beacon period;
   determine, based on a plurality of pieces of the transmission data information acquired, a transmission data amount allowed for each of the communication devices (110; 120; 130; 140; 150; 160; 170) in the next beacon period; and
   notify the communication devices (110; 120; 130; 140; 150; 160; 170) of the determined transmission data amount in a current beacon period.

2. The management device (100) according to claim 1, wherein the communication system (10) uses 10BASE-T1S that conforms to the IEEE 802.3cg standard.

3. The management device (100) according to claim 1, wherein the transmission priority is a total value of weights assigned to the data to be transmitted, the weights being calculated based on a storage position of high-priority data in the data to be transmitted stored in a transmission buffer of each of the communication devices (110; 120; 130; 140; 150; 160; 170).

4. The management device (100) according to claim 3, wherein the processor is configured to determine the transmission data amount based on a total value of a total amount of data that are allowed to be transmitted in one beacon period, a total value of amounts of data for the communication devices (110; 120; 130; 140; 150; 160; 170), and a total value of the weights for the communication devices (110; 120; 130; 140; 150; 160; 170).

5. The management device (100) according to claim 1, wherein the processor is configured to notify the communication devices (110; 120; 130; 140; 150; 160; 170) of the transmission data amount by transmitting the transmission data amount subsequent to a beacon.

6. The management device (100) according to any one of claims 1 to 5, wherein the data are frames, and the data amount is the number of the frames.

7. The management device (100) according to claim 1, wherein the management device (100) and the communication devices (110; 120; 130; 140; 150; 160; 170) are each an in-vehicle device mounted on a vehicle.

8. A vehicle comprising the management device (100) according to claim 1.

9. A communication system (10) comprising a plurality of communication devices (110; 120; 130; 140; 150; 160; 170) configured to communicate according to a predetermined beacon period and a management device (100) configured to manage the communication devices (110; 120; 130; 140; 150; 160; 170), wherein the management device (100) includes a processor configured to:

   acquire, from each of the communication devices (110; 120; 130; 140; 150; 160; 170), transmission data information including information on a data amount and a transmission priority relating to data to be transmitted in a next beacon period;
   determine, based on a plurality of pieces of the transmission data information acquired, a transmission data amount allowed for each of the communication devices (110; 120; 130; 140; 150; 160; 170) in the next beacon period; and
   notify the communication devices (110; 120; 130; 140; 150; 160; 170) of the determined transmission data amount in a current beacon period.

10. A method performed by a management device (100) configured to manage a plurality of communication devices (110; 120; 130; 140; 150; 160; 170) in a communication system (10) configured to communicate according to a predetermined beacon period, the method comprising:

   acquiring, from each of the communication devices (110; 120; 130; 140; 150; 160; 170), transmission data information including information on a data amount and a transmission priority relating to data to be transmitted in a next beacon period;
   determining, based on a plurality of pieces of the transmission data information acquired, a transmission data amount allowed for each of the communication devices (110; 120; 130; 140; 150; 160; 170) in the next beacon period; and
   notifying the communication devices (110; 120; 130; 140; 150; 160; 170) of the determined transmission data amount in a current beacon period.

11. A non-transitory storage medium storing instructions for causing a processor of a management device (100) configured to manage a plurality of communication devices (110; 120; 130; 140; 150; 160; 170) in a communication system (10) configured to communicate according to a predetermined beacon period to execute a function comprising:

   acquiring, from each of the communication devices (110; 120; 130; 140; 150; 160; 170), transmission data information including information on a data amount and a transmission priority relating to data to be transmitted in a next beacon period;
   determining, based on a plurality of pieces of the transmission data information acquired, a transmission data amount allowed for each of the communication devices (110; 120; 130; 140; 150; 160; 170) in the next beacon period; and
notifying the communication devices (110; 120; 130; 140; 150; 160; 170) of the determined transmission data amount in a current beacon period.

# FIG. 1

<u>10</u>

(ID #0)　　　　(ID #1)　　　　(ID #2)　　　　(ID #3)

| NODE 0 (COORDINATOR) | NODE 1 (FIRST FOLLOWER) | NODE 2 (SECOND FOLLOWER) | NODE 3 (THIRD FOLLOWER) |

100　　　　　110　　　　　120　　　　　130

180

(ID #4)　　　　(ID #5)　　　　(ID #6)　　　　(ID #7)

| NODE 4 (FOURTH FOLLOWER) | NODE 5 (FIFTH FOLLOWER) | NODE 6 (SIXTH FOLLOWER) | NODE 7 (SEVENTH FOLLOWER) |

140　　　　　150　　　　　160　　　　　170

# FIG. 2A

~100

**COORDINATOR**

~201

ACQUISITION UNIT

~202

DETERMINATION UNIT

~203

SETTING CHANGE UNIT

~204

NOTIFICATION UNIT

# FIG. 2B

~110～170

**FOLLOWER**

~211

NOTIFICATION UNIT

~212

ACQUISITION UNIT

~213

SETTING CHANGE UNIT

# FIG. 3

ONE PLCA CYCLE

| B | COORDI-NATOR | FIRST FOLLOWER | SECOND FOLLOWER | THIRD FOLLOWER | | SEVENTH FOLLOWER | B | COORDI-NATOR | ... |

| TO | C | FRAME (LEADING) | FRAME | | FRAME (FINAL) |

# FIG. 4A

| | TRANSMISSION ORDER | | | |
|---|---|---|---|---|
| NUMBER OF DATA | 1 | 2 | 3 | 4 |
| PRIORITY | HIGH | MEDIUM | LOW | |
| WEIGHT VALUE | 10 | 4 | 1 | |

TRANSMISSION DATA INFORMATION  →  15:100

# FIG. 4B

| | TRANSMISSION ORDER | | | |
|---|---|---|---|---|
| NUMBER OF DATA | 1 | 2 | 3 | 4 |
| PRIORITY | LOW | MEDIUM | HIGH | |
| WEIGHT VALUE | 10 | 10 | 10 | |

TRANSMISSION DATA INFORMATION  →  30:001

# FIG. 5

```
        ┌─────────────────────────────┐
        │    COORDINATOR CONTROL      │
        └─────────────────────────────┘
                      │
                      ▼
        ┌─────────────────────────────┐  S501
        │       OUTPUT BEACON         │
        └─────────────────────────────┘
                      │
                      ▼
              ◇ OPPORTUNITY           ◇  S502
              FOR TRANSMISSION FOR        ── NO
                   ITSELF?
                      │ YES
                      ▼
        ┌─────────────────────────────┐  S503
        │ TRANSMIT CURRENT ALLOWABLE  │
        │ TRANSMISSION DATA AMOUNT TO │
        │       EACH FOLLOWER         │
        └─────────────────────────────┘
                      │
                      ▼
        ┌─────────────────────────────┐  S504
        │   TRANSMIT FRAMES OF ITSELF │
        └─────────────────────────────┘
                      │
                      ▼
        ┌─────────────────────────────┐  S505
        │ RECEIVE NEXT TRANSMISSION   │
        │ DATA INFORMATION FROM EACH  │
        │          FOLLOWER           │
        └─────────────────────────────┘
                      │
                      ▼
        ┌─────────────────────────────┐  S506
        │ DETERMINE NEXT ALLOWABLE    │
        │ TRANSMISSION DATA AMOUNT    │
        │ BASED ON NEXT TRANSMISSION  │
        │     DATA INFORMATION        │
        └─────────────────────────────┘
                      │
                      ▼
        ┌─────────────────────────────┐  S507
        │ CHANGE PLCA SETTINGS OF     │
        │ ITSELF BASED ON NEXT        │
        │ ALLOWABLE TRANSMISSION      │
        │      DATA AMOUNT            │
        └─────────────────────────────┘
                      │
                      ▼
        ┌─────────────────────────────┐  S508
        │ DERIVE NEXT TRANSMISSION    │
        │ DATA INFORMATION OF ITSELF  │
        └─────────────────────────────┘
```

# FIG. 6

```
        ╭─────────────────────╮
        │   FOLLOWER CONTROL   │
        ╰─────────────────────╯
                    │
                    │◄──────────────────────────────┐
                    │            S601                │
        ┌───────────────────────────┐               │
        │      RECEIVE BEACON        │               │
        └───────────────────────────┘               │
                    │            S602                │
        ┌───────────────────────────┐               │
        │ RECEIVE CURRENT ALLOWABLE  │               │
        │  TRANSMISSION DATA AMOUNT  │               │
        │      FROM COORDINATOR      │               │
        └───────────────────────────┘               │
                    │            S603                │
        ┌───────────────────────────┐               │
        │  CHANGE PLCA SETTINGS OF   │               │
        │  ITSELF BASED ON CURRENT   │               │
        │   ALLOWABLE TRANSMISSION   │               │
        │        DATA AMOUNT         │               │
        └───────────────────────────┘               │
                    │            S604                │
        ┌───────────────────────────┐               │
        │ DERIVE NEXT TRANSMISSION   │               │
        │   DATA INFORMATION OF      │               │
        │          ITSELF            │               │
        └───────────────────────────┘               │
                    │                                │
                    │◄──────────────────────┐        │
                    ▼          S605          │        │
                ◇─────────◇                  │        │
            OPPORTUNITY FOR              NO  │        │
          TRANSMISSION FOR ──────────────────┘        │
                ITSELF?                               │
                ◇─────────◇                           │
                    │ YES                             │
                    │          S606                   │
        ┌───────────────────────────┐               │
        │  TRANSMIT NEXT TRANSMISSION │              │
        │  DATA INFORMATION TO        │              │
        │      COORDINATOR            │              │
        └───────────────────────────┘               │
                    │          S607                   │
        ┌───────────────────────────┐               │
        │  TRANSMIT FRAMES OF ITSELF  │──────────────┘
        └───────────────────────────┘
```

# FIG. 7

COORDINATOR → 11:10

| NUMBER OF DATA | 1 | 2 | 3 | 4 |
|---|---|---|---|---|
| PRIORITY | HIGH | LOW | | |
| WEIGHT VALUE | 10 | 1 | | |

FIRST FOLLOWER → 30:001

| NUMBER OF DATA | 1 | 2 | 3 | 4 |
|---|---|---|---|---|
| PRIORITY | LOW | MEDIUM | HIGH | |
| WEIGHT VALUE | 10 | 10 | 10 | |

SECOND FOLLOWER → 8:00

| NUMBER OF DATA | 1 | 2 | 3 | 4 |
|---|---|---|---|---|
| PRIORITY | LOW | MEDIUM | | |
| WEIGHT VALUE | 4 | 4 | | |

THIRD FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

FOURTH FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

FIFTH FOLLOWER → 8:00

| NUMBER OF DATA | 1 | 2 | 3 | 4 |
|---|---|---|---|---|
| PRIORITY | LOW | MEDIUM | | |
| WEIGHT VALUE | 4 | 4 | | |

SIXTH FOLLOWER → 8:00

| NUMBER OF DATA | 1 | 2 | 3 | 4 |
|---|---|---|---|---|
| PRIORITY | LOW | MEDIUM | | |
| WEIGHT VALUE | 4 | 4 | | |

SEVENTH FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

FIG. 8

# FIG. 9

### COORDINATOR → 11:10

| NUMBER OF DATA | 1 | 2 | 3 | 4 |
|---|---|---|---|---|
| PRIORITY | HIGH | LOW | | |
| WEIGHT VALUE | 10 | 1 | | |

### FIRST FOLLOWER → 30:001

| NUMBER OF DATA | 1 | 2 | 3 | 4 |
|---|---|---|---|---|
| PRIORITY | LOW | MEDIUM | HIGH | |
| WEIGHT VALUE | 10 | 10 | 10 | |

### SECOND FOLLOWER → 31:0010

| NUMBER OF DATA | 1 | 2 | 3 | 4 |
|---|---|---|---|---|
| PRIORITY | LOW | MEDIUM | HIGH | LOW |
| WEIGHT VALUE | 10 | 10 | 10 | 1 |

### THIRD FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

### FOURTH FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

### FIFTH FOLLOWER → 12:000

| NUMBER OF DATA | 1 | 2 | 3 | 4 |
|---|---|---|---|---|
| PRIORITY | LOW | MEDIUM | MEDIUM | |
| WEIGHT VALUE | 4 | 4 | 4 | |

### SIXTH FOLLOWER → 9:000

| NUMBER OF DATA | 1 | 2 | 3 | 4 |
|---|---|---|---|---|
| PRIORITY | LOW | MEDIUM | LOW | |
| WEIGHT VALUE | 4 | 4 | 1 | |

### SEVENTH FOLLOWER → 1:0

| NUMBER OF DATA | 1 | 2 | 3 | 4 |
|---|---|---|---|---|
| PRIORITY | LOW | | | |
| WEIGHT VALUE | 1 | | | |

EP 4 770 019 A1

FIG. 10

EP 4 770 019 A1

# FIG. 11

COORDINATOR → 11:10

| NUMBER OF DATA | 1 | 2 | 3 | 4 |
|---|---|---|---|---|
| PRIORITY | HIGH | LOW | | |
| WEIGHT VALUE | 10 | 1 | | |

FIRST FOLLOWER → 30:001

| NUMBER OF DATA | 1 | 2 | 3 | 4 |
|---|---|---|---|---|
| PRIORITY | LOW | MEDIUM | HIGH | |
| WEIGHT VALUE | 10 | 10 | 10 | |

SECOND FOLLOWER → 31:0010

| NUMBER OF DATA | 1 | 2 | 3 | 4 |
|---|---|---|---|---|
| PRIORITY | LOW | MEDIUM | HIGH | LOW |
| WEIGHT VALUE | 10 | 10 | 10 | 1 |

THIRD FOLLOWER → 20:01

| NUMBER OF DATA | 1 | 2 | 3 | 4 |
|---|---|---|---|---|
| PRIORITY | LOW | HIGH | | |
| WEIGHT VALUE | 10 | 10 | | |

FOURTH FOLLOWER → 10:1

| NUMBER OF DATA | 1 | 2 | 3 | 4 |
|---|---|---|---|---|
| PRIORITY | HIGH | | | |
| WEIGHT VALUE | 10 | | | |

FIFTH FOLLOWER → 24:010

| NUMBER OF DATA | 1 | 2 | 3 | 4 |
|---|---|---|---|---|
| PRIORITY | LOW | HIGH | MEDIUM | |
| WEIGHT VALUE | 10 | 10 | 4 | |

SIXTH FOLLOWER → 15:100

| NUMBER OF DATA | 1 | 2 | 3 | 4 |
|---|---|---|---|---|
| PRIORITY | HIGH | MEDIUM | LOW | |
| WEIGHT VALUE | 10 | 4 | 1 | |

SEVENTH FOLLOWER → 10:1

| NUMBER OF DATA | 1 | 2 | 3 | 4 |
|---|---|---|---|---|
| PRIORITY | HIGH | | | |
| WEIGHT VALUE | 10 | | | |

EP 4 770 019 A1

# FIG. 12

EP 4 770 019 A1

| B | COORDINATOR | | FIRST FOLLOWER | | | |
|---|---|---|---|---|---|---|
| | FRAME | FRAME | FRAME | FRAME | FRAME | FRAME |

| SECOND FOLLOWER | | | | THIRD FOLLOWER | | |
|---|---|---|---|---|---|---|
| FRAME | FRAME | FRAME | FRAME | FRAME | FRAME | FRAME |

| FOURTH FOLLOWER | | FIFTH FOLLOWER | | | |
|---|---|---|---|---|---|
| FRAME | FRAME | FRAME | FRAME | FRAME | FRAME |

| SIXTH FOLLOWER | | | SEVENTH FOLLOWER | |
|---|---|---|---|---|
| FRAME | FRAME | FRAME | FRAME | FRAME |

Europäisches
Patentamt
European
Patent Office
Office européen
des brevets

# EUROPEAN SEARCH REPORT

**Application Number**

EP 25 22 0470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 297 348 A1 (NXP BV [NL]) 27 December 2023 (2023-12-27) | 1-3,5-11 | INV. H04L12/40 |
| A | * paragraphs [0041] - [0071]; figure 5A * ----- | 4 | H04L12/403 |
| Y | US 2019/363991 A1 (SOSTAWA BERND [DE] ET AL) 28 November 2019 (2019-11-28) * paragraphs [0032] - [0042], [0049] - [0068] * ----- | 1-3,5-11 | |
| A | US 2022/209984 A1 (MUTTER ARTHUR [DE] ET AL) 30 June 2022 (2022-06-30) * paragraphs [0045] - [0156]; figure 1 * ----- | 1-11 | |
| A | MIN JIHYEON ET AL: "Performance Enhancement of In-Vehicle 10BASE-T1S Ethernet Using Node Prioritization and Packet Segmentation", IEEE ACCESS, [Online] vol. 10, 1 January 2022 (2022-01-01), pages 103286-103295, XP093275322, USA ISSN: 2169-3536, DOI: 10.1109/ACCESS.2022.3209824 Retrieved from the Internet: URL:https://ieeexplore.ieee.org/ielx7/6287639/9668973/09903423.pdf> * the whole document * ----- | 1-11 | **TECHNICAL FIELDS SEARCHED (IPC)**<br><br>H04L |

The present search report has been drawn up for all claims

| Place of search | Date of completion of the search | Examiner |
|---|---|---|
| Munich | 5 May 2026 | Itani, Maged |

EPO FORM 1503 03.82 (P04C01)

## ANNEX TO THE EUROPEAN SEARCH REPORT
## ON EUROPEAN PATENT APPLICATION NO.

EP 25 22 0470

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2026

| Patent document cited in search report | Publication date | Patent family member(s) | Publication date |
|---|---|---|---|
| EP 4297348 A1 | 27-12-2023 | NONE | |
| US 2019363991 A1 | 28-11-2019 | CN 112154630 A | 29-12-2020 |
| | | DE 112019002669 T5 | 04-03-2021 |
| | | JP 7314178 B2 | 25-07-2023 |
| | | JP 2021525473 A | 24-09-2021 |
| | | KR 20210010841 A | 28-01-2021 |
| | | US 2019363991 A1 | 28-11-2019 |
| | | WO 2019226585 A1 | 28-11-2019 |
| US 2022209984 A1 | 30-06-2022 | CN 113940038 A | 14-01-2022 |
| | | DE 102019205487 A1 | 22-10-2020 |
| | | EP 3957034 A1 | 23-02-2022 |
| | | US 2022209984 A1 | 30-06-2022 |
| | | WO 2020212217 A1 | 22-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018170550 A